# EUROPEAN PATENT SPECIFICATION

(11) **EP 3 737 561 B1**
(45) Date of publication and mention of the grant of the patent: **14.10.2026**
(21) Application number: 19738231.0
(22) Date of filing: 10.01.2019
(51) Int. Cl.: B32B 7/06, B32B 27/06, B32B 27/14, B32B 27/30, B32B 5/16, B32B 7/12, C09J 7/24, C09J 7/29

(54) **EASY-TO-CLEAN PROTECTIVE FILM AND SUBSTRATE ASSEMBLY**
LEICHT ZU REINIGENDE SCHUTZFOLIE UND SUBSTRATANORDNUNG
FILM DE PROTECTION FACILE À NETTOYER ET ENSEMBLE SUBSTRAT

(30) Priority: 10.01.2018 CN 201820041055 U
(43) Date of publication of application: 18.11.2020
(73) Proprietor: 3M Innovative Properties Company, Saint Paul, Minnesota 55133-3427 (US)
(72) Inventor: HUANG, Pei, Shanghai 200336 (CN); CHEN, Xue-hua, Shanghai 200336 (CN)
(74) Representative: Vossius & Partner Patentanwälte Rechtsanwälte mbB
(86) International application number: PCT/IB2019/050200
(87) International publication number: WO 2019/138357

(56) References cited:
- EP-A1- 0 286 225
- US-A1- 2002 142 150
- US-A1- 2003 124 301
- US-A1- 2005 208 269
- US-A1- 2005 208 269
- US-A1- 2010 004 373
- US-A1- 2011 097 548
- US-A1- 2013 059 120
- US-A1- 2013 059 120

## Description

### TECHNICAL FIELD

The present application belongs to the technical field of protective films for vehicles, in particular, to an easy-to-clean protective film and a substrate assembly.

### BACKGROUND

Coatings for vehicles such as automobiles protect not only the metals of the body from corrosion, they also make the vehicles more presentable. The vast majority of vehicle coatings contain volatile organic compounds (VOC). In order to protect the environment, countries have introduced relevant regulations to control VOC emissions. Nevertheless, regular cleaning and maintenace need to be done on the vehicles to maintain the exterior gloss and cleanliness.

It is therefore necessary to have a protective film to replace the vehicle coating. Such a protective form should be able to meet the national requirements on VOC emission control, and protect the vehicles from the body corrision at the same time. At present, protective films for vehicles, such as automobile protective films, are mainly applied to glass substrates. Research on easy-to-clean protective films for automobile body coatings is sparsely seen.

For example US2005/208269A1 describes sheet extrudates with self-cleaning properties and a process for their production. Such polymeric sheets are to comprise a layer of microparticles which have hydrophobic properties. Exemplified are particularly layers of silica.

### SUMMARY

The inventor find that at least the following problems exist in the prior art: on the one hand, dust, oil stains, or other heavy stains are difficult to be cleaned; on the other hand, if the stains are cleaned through physical rubbing, foreign particles will leave permanent scratches on the vehicle body as the vehicle cleaning frequency increases; and if the car body is cleaned by using a strong chemical cleaning agent, the exterior gloss of the vehicles is gradually flattened because of the chemical cleaning agent used during the cleaning process.

The present application provides an easy-to-clean protective film and a substrate assembly to solve the problems that the current vehicle coating is liable to permanent scraches and hard to clean.

In order to solve the technical problems, the present application adopts the following technical solution:
An easy-to-clean protective film, comprising a polyvinyl chloride (PVC) bottom film and an easy-to-clean layer consisting of silicon dioxide particles on a side of the PVC bottom film. Preferably, the polyvinyl chloride bottom film has a thickness of from 50µm to 100µm. The easy-to-clean layer has a thickness of from 150 nm to 1µm. Preferably, the silicon dioxide particle has a particle size of from 2 nm to 100 nm. Preferably, the silicon dioxide particle has a particle size of from 2 nm to 10 nm. Preferably, a bonding layer is further arranged between the polyvinyl chloride bottom film and the easy-to-clean layer, and the polyvinyl chloride bottom film and the easy-to-clean layer are bonded together through the bonding layer. Preferably, the bonding layer consists of polyurethane (PU). Preferably, the bonding layer has a thickness of from 5 µm to 75 µm. Preferably, a pressure-sensitive adhesive layer is arranged on a side, far away from the easy-to-clean layer, of the PVC bottom film. Preferably, a release layer is further arranged on a side, far away from the PVC bottom film, of the pressure-sensitive adhesive layer.

The present application further provides a substrate assembly, comprising a substrate having arranged thereon a coating layer formed through coating, wherein the easy-to-clean protective film mentioned above is attached to the coating layer.

The present application further provides a substrate assembly, comprising a substrate having the easy-to-clean protective film mentioned above attached thereon.

The easy-to-clean protective film provided by the present application comprises a PVC bottom film for protecting a metal coating and an easy-to-clean layer consisting of silicon dioxide particles. The water contact angle of the easy-to-clean layer is small and thus the adhesive force of dust and oil stains can be reduced. After the surface of the easy-to-clean layer is contaminated with dust and oil stains, the dust and oil stains can be easily cleaned with a simple cleaning. The easy-to-clean protective film provided by the present application is suitable for projecting metal substrates, nonmetal substrates, and metal coating layers (i.e., coating layers formed through coatings on metal substrates). The easy-to-clean protective film provided by the present application is particularly suitable for being attached to the vehicle body surfaces, such as automobiles, motorcycles, high-speed railway cars, and subway cars.

### BRIEF DESCRIPTION OF THE DRAWINGS

FIG. 1 illustrates a structural schematic view of an easy-to-clean protective film according to embodiment 1 of the present application.
FIG. 2 illustrates a structural schematic view of an easy-to-clean protective film according to embodiment 2 of the present application.
FIG. 3 illustrates a structural schematic view of an easy-to-clean protective film according to embodiment 2 of the present application.

In the drawings, the reference numerals include the following: 1. PVC bottom film; 2. easy-to-clean layer; 3. bonding layer; 4. pressure-sensitive adhesive layer; and 5. release layer.

### DETAILED DESCRIPTION

In order to enable those skilled in the art to better understand the technical solution of the present application, the present application will be further described below in details with reference to the drawings and in combination with the specific embodiments.

For details of raw materials and instrument information in the following embodiments, see Table 1. It should be noted that the raw materials in the following embodiments are commercially available. When similar commercially available raw materials of other suppliers or with other names of commodities are adopted, the experimental results are similar to those of the present application.

**Table 1**

| Raw material or instrument | Name of commodity | Supplier |
|---|---|---|
| Polyurethane solution containing Sn catalyst with solid content of 73 wt% | Polyurethane solution | 3M |
| Dispersion of silicon dioxide with solid content of 5wt% | Silicon dioxide solution | 3M |
| PVC cast film | 3699 | 3M |
| Composite protective film of paint and PU | Xpel Lux | Xpel |
| PVC film | 8519 | 3M |
| Composite protective film of fluororubber/acrylic resin coating | 8528 | 3M |
| High-gloss solvent-based coating coated to aluminum plate | Nil | Lankwitzer (Beijing) Coatings Science and Technology Co., Ltd. |
| Dust stains | GSB 08-2992-2013 | Shanghai Research Institute of Building Science (Group) Co., Ltd. |
| Oil stains | GTX SN 10W-40 | Castrol APL |
| Lubricating grease | MP | Mobil |
| Contact angle testing instrument | DSA 100 | Kruss |
| Corona treatment instrument | DY-2 | Shanghai Haohua Electronic Science and Technology Co., Ltd. |
| Cleaning machine | Gardner-scrub 5060 | BYK |
| Cleaning agent | VC-1C | Shanghai Jibiao Chemical Co., Ltd. |
| Gloss Testing Instrument | Gardner GmbH miro-TRI-gloss | BYK |
| Colorimeter | SpectroEye | X-rite |

### Embodiment 1

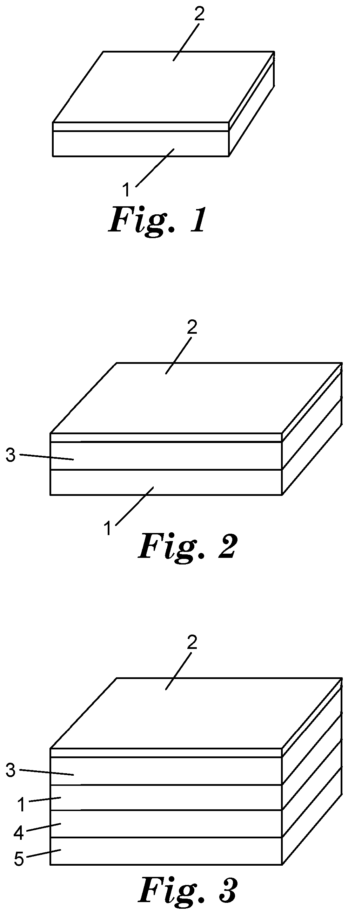

This embodiment provides an easy-to-clean protective film. As illustrated in FIG. 1, the easy-to-clean protective film includes a PVC bottom film 1 for protecting metal substrates, non-metal substrates, or metal coating layers and an easy-to-clean layer 2 (also referred to as a silicon dioxide layer) consisting of silicon dioxide particles. Herein, a transparent PVC cast film may be used as the PVC bottom film 1, so as not to affect the color and brightness of the metal coating layer itself.

When the easy-to-clean protective film is used, the PVC bottom film 1 is attached to the metal coating layer; and the easy-to-clean layer 2 is exposed to the environmental surface. Since the easy-to-clean layer 2 consists of silicon dioxide particles having a small water contact angle, the adhesive force of dust and oil stains can be reduced. When the surface of the easy-to-clean layer 2 is contaminated with dust and oil stains, the dust and oil stains can be cleaned with a simple cleaning.

### Embodiment 2

This embodiment provides an easy-to-clean protective film. As illustrated in FIG. 2, the easy-to-clean protective film includes a PVC bottom film 1 used for protecting metal substrates, non-metal substrates, or metal coating layers, and an easy-to-clean layer 2 consisting of silicon dioxide particles. A bonding layer 3 consisting of polyurethane (PU) (also referred to as a polyurethane layer) is arranged between the PVC bottom film 1 and the easy-to-clean layer 2 to enhance the bonding force therebetween. Herein, the raw materials of the PVC bottom film 1, the silicon dioxide layer, and the polyurethane layer in this embodiment are all commercially available.

In the long-term use of the easy-to-clean protective film provided by embodiment 1, especially after repeated rinsing, rubbing, and cleaning, the silicon dioxide particles of the easy-to-clean layer 2 are at risk of coming off. In order to reduce this risk and increase the service life of the easy-to-clean protective film, a bonding layer 3 consisting of polyurethane is added between the PVC bottom film 1 and the easy-to-clean layer 2 in embodiment 2. The binding layer 3 not only has good binding ability with the PVC bottom film 1, it can also securely lock the silicon dioxide particles.

Preferably, the PVC bottom film 1 has a thickness of from 50 µm to 100 µm.
Herein, if the thickness of the PVC bottom film 1 is less than 50 µm, it is too thin to protect a metal coating layer. If the thickness of the PVC bottom film 1, on the other hand, is more than 100 µm, it is too thick to be adhered to the metal coating layer.

Preferably, the bonding layer 3 has a thickness of from 5 µm to 75 µm.

Herein, if the thickness of the bonding layer 3 is less than 5 µm, it will be difficult to coat because of the deviation in thickness uniformity of PVC bottom film 1 itself; and if the thickness of the bonding layer 3, on the other hand, is more than 75 µm, it will increase the overall thickness of the product, which is adversely affecting the adhesion with a metal substrate, a nonmetal substrate, or a metal coating layer. Further, the increae of thickness also increases the product cost.

The thickness of the easy-to-clean layer 2 has a thickness of from150 nm to 1 µm. Herein, if the thickness of the easy-to-clean layer 2 is less than 150 nm, the easy-to-clean effect becomes poor; and if the thickness of the easy-to-clean layer 2 is more than 1 µm, the appearance of the product will be affected, resulting in cracking of the easy-to-clean protective film, which in turn gives rise to defects.

Preferably, the silicon dioxide particles has a particle size of from 2 nm to 100 nm.
Herein, the thickness of the easy-to-clean layer 2 directly affects the difficulty in cleaning and cleaning effect of the product. Preferably, the particle size of the silicon dioxide particles is from 2 nm to 10nm. When the particle size of the silicon dioxide particles is 2 nm, the water contact angle of the surface of the easy-to-clean layer 2 is small with higher roughness, leading to a smaller adhesive force of dust and oil stains thereon, which is beneficial to cleaning.

Alternatively, a pressure-sensitive adhesive layer 4 is arranged on a side, far from the easy-to-clean layer 2, of the PVC bottom film 1, and is used for bonding the easy-to-clean protective film onto the surface of the metal coating layer. Preferably, a release layer 5 is further arranged on a side, far from the PVC bottom film 1, of the pressure-sensitive adhesive layer 4.

In short, as illustrated in FIG. 3, in mass production of the easy-to-clean protective film product, the pressure-sensitive adhesive layer 4 can be bonded directly onto one side, far away from the easy-to-clean layer 2, of the PVC bottom film 1. Before use, a release layer 5 is attached to the pressure-sensitive adhesive layer 4. When in use, the release layer 5 can be torn off and the pressure-sensitive adhesive layer 4 can be bonded onto the surface of the metal coating layer.

### Embodiment 3

This embodiment provides a method for preparing an easy-to-clean protective film, including the following steps:
(1) Polyurethane solution containing Sn catalyst was coated on the surface of a transparent PVC cast film, and curing was performed for 3.5 min to 5 min at 110-120 °C to form a polyurethane layer, i.e., a bonding layer. Then, corona treatment was performed under a condition of 200 mj/cm².
(2) The polyurethane layer was coated with silicon dioxide dispersion, and curing was performed for 3.5 min to 5 min at 110-120 °C to form a silicon dioxide layer, i.e., an easy-to-clean layer.

### Cleaning performance test:

This test method (1) evaluated the anti-dust performance of samples by examining the gloss of the samples before and after contaminated with dust stains; (2) evaluated the oil stain cleaning effect of the samples by examining the gloss and differences in color of the samples before contaminated with oil stains and after cleaned.

### Test A: anti-dust performance

The gloss G1 of the samples before contaminated was measured by using a gloss testing instrument; then the samples were covered with dry dust stains; and the gloss G2 of the samples after contaminated was measured by using the gloss testing instrument.

The gloss change rate G=(G1-G2)/G1*100% was calculated. A smaller G value indicates the smaller gloss change after contamination, which in turn shows a better anti-ash performance.

### Test B: oil stain cleaning effect

The gloss H1 of the samples before contaminated was measured by using a gloss testing instrument; and then the samples were covered with oil stains. The samples were cleaned using the aqueous solution of a cleaning agent in a cleaning machine; and the gloss H2 of the samples after being cleaned was measured by using the gloss testing instrument.

The gloss change rate H=(H1-H2)/H1*100% was calculated. A smaller H value indicates the smaller gloss change, which in turn shows a better cleaning effect.

The differences in color (L, a, b) of the samples before contaminated and the differences in color (L', a', b') after contaminated and cleaned by adopting the above-mentioned method were measured by using a colorimeter, and calculation was performed as follows: $DeltaE = {\left({\left(L-L′\right)}^{2}+{\left(a-a′\right)}^{2}+{\left(b-b′\right)}^{2}\right)}^{1 / 2}$

A smaller Delta E value means that it is easier to clean.

Sample 1: according to the preparation method provided by embodiment 3, an easy-to-clean protective film with a structure as described in embodiment 2 was prepared. Specifically, the thickness of the PVC cast film was 50 µm; the thickness of the polyurethane layer was 30 µm; the thickness of the silicon dioxide layer was 260 nm; and the particle size of the silicon dioxide particles was 2 nm.

Sample 2: according to the preparation method provided by embodiment 3, an easy-to-clean protective film with a structure as described in embodiment 2 was prepared. Specifically, the thickness of the PVC cast film was 100 µm; the thickness of the polyurethane layer was 5 µm; the thickness of the easy-to-clean layer was 150 nm; and the particle size of the silicon dioxide particles was 2 nm.

Sample 3: according to the preparation method provided by embodiment 3, an easy-to-clean protective film with a structure as described in embodiment 2 was prepared. Specifically, the thickness of the PVC cast film was 80 µm; the thickness of the polyurethane layer was 75 µm; the thickness of the easy-to-clean layer was 100 nm; and the particle size of the silicon dioxide particles was 2 nm.

Sample 4: commercially available composite protective film of paint and PU (name of commodity: Xpel Lux).

Sample 5: composite protective film of transparent PVC film and fluororubber (KelF)/acrylic resin paint (name of commodity: 8528).

Sample 6: transparent PVC film (name of commodity: 8519).

Sample 7: high-gloss solvent-based coating coated onto a aluminum plate.

Samples 1-7 were tested respectively according to the cleaning performance test method disclosed by the present application. The results of the anti-dust performance test are shown in Table 2. The results of the oil stain cleaning test are shown in Table 3.

**Table 2**

| | Gloss | | |
|---|---|---|---|
| | Before contaminated G1 | After contaminated G2 | Change rate G |
| Sample 1 | 85 | 50.3 | 40.8% |
| Sample 2 | 85.3 | 34 | 60.1% |
| Sample 3 | 82.5 | 32.3 | 60.8% |
| Sample 4 | 94.1 | 56.8 | 39.6% |
| Sample 5 | 87.3 | 4 | 95.4% |
| Sample 6 | 89.4 | 38.6 | 56.8% |
| Sample 7 | 95.1 | 10.3 | 89.2% |

**Table 3**

| | Gloss | | | Differences in color | | |
|---|---|---|---|---|---|---|
| | Before contaminated H1 | After cleaned H2 | Change rate H | Before contaminated (L, a, b) | After cleaned (L', a', b') | Delta E |
| Sample 1 | 85 | 67.4 | 20.7% | (94.67, -1.23, 0.31) | (92.01, -0.33, 1.35) | 3.0 |
| Sample 2 | 85.3 | 53.2 | 37.6% | (94.96, -1.39, 0.07) | (89.65,1.76,2.66) | 6.7 |
| Sample 3 | 82.5 | 51.5 | 37.5% | (94.76, -1.22, 0.3) | (87.34, 1.78, 2.62) | 8.3 |
| Sample 4 | 94.1 | 55.3 | 41.2% | (84.64, -0.48, 3.11) | (81.46, 1.59, 4.58) | 4.1 |
| Sample 5 | 87.3 | 51.2 | 41.3% | (93.55, -1.7, 2.25) | (88.31, 1.68, 4.54) | 6.6 |
| Sample 6 | 89.4 | 42.6 | 52.3% | (93.1, -1.69, 0.45) | (85.99, 2.68, 3.85) | 9.0 |
| Sample 7 | 95.1 | 62.1 | 34.7% | (86.88, 0.16, 3.11) | (84.6, 1.51, 4.28) | 2.9 |

The above cleaning performance test data shows that the easy-to-clean protective film disclosed by the present application has better anti-dust performance; and after contaminated with oil stains, the surface of the easy-to-clean protective film can be restored as before with a simple cleaning. The thickness of the easy-to-clean layer has a certain influence on the cleaning effect.

### Bonding ability test of silicon dioxide layer:

Sample 8: a transparent PVC cast film was subjected to corona treatment under a condition of 200 mj/cm²; and then a silicon dioxide layer was formed on the surface of the transparent PVC cast film. Herein, the thickness of the PVC cast film was 50 µm; the thickness of the silicon dioxide layer was 200 nm; and the particle size of silicon dioxide was 2 nm.

Sample 9: a polyurethane layer was formed on a transparent PVC cast film, and then a silicon dioxide layer was formed. Herein, the thickness of the PVC cast film was 50 µm; the thickness of the polyurethane layer was 30 µm; the thickness of the silicon dioxide layer was 260 nm; and the particle size of silicon dioxide was 2 nm.

Sample 10: according to the preparation method provided by embodiment 3, an easy-to-clean protective film with a structure as described in embodiment 2 was prepared. Herein, the thickness of the PVC cast film was 50 µm; the thickness of the polyurethane layer was 30 µm; the thickness of the silicon dioxide layer was 360 nm; and the particle size of silicon dioxide was 2 nm.

A contact angle measuring instrument was used to first measure the initial contact angles of samples 8-10 respectively; and then cotton cloths were used to respectively rub samples 8-10 for 100 times, 200 times, 300 times, and 1000 times. The contact angles was measured after 1000 times, and the experiments results are shown in Table 4.

**Table 4**

| | Initial contact angle | After being rubbed for 100 times | After being rubbed for 200 times | After being rubbed for 300 times | After being rubbed for 1000 times |
|---|---|---|---|---|---|
| Sample 8 | 32-39 | 76-81 | --- | --- | --- |
| Sample 9 | 31-32 | 19-20 | 57-62 | --- | --- |
| Sample 10 | 32-33 | 36-37 | 22-24 | 14-15 | 21-23 |

The symbol "---" for sample 8 in Table 4 means that, after the sample was rubbed for 100 times, the contact angle increased significantly; and the coating effect of the product failed. No further rubbing test was needed. For sample 9, the symbol "---" has the similar meaning.

The above test data indicates that the bonding ability of the silicon dioxide layer of sample 10 is the best. By arranging a bonding layer consisting of polyurethane between the PVC film and the silicon dioxide layer, the silicon dioxide particles can be prevented from coming off after the easy-to-clean protective film is repeatedly rinsing, rubbing, and cleaning, thereby increasing the service life of the easy-to-clean protective film.

### Embodiment 4

This embodiment provides a substrate assembly, comprising a substrate having arranged thereon a coating layer formed through coating. The easy-to-clean protective film according to the above-mentioned embodiment is attached to the coating layer.

### Embodiment 5

This embodiment provides a substrate assembly, comprising a substrate having the easy-to-clean protective film according to the above-mentioned embodiment attached thereon.

Specifically, the substrates in embodiment 4 and 5 may be made of metal materials or other non-metallic materials; and more specifically, the substrates may be the bodies of vehicles such as automobiles, motorcycles, high-speed railway cars, and subway cars. The substrates may also be other substrates exposed to and used in unclean environments.
Herein, after the surfaces of the substrate assemblies in embodiment 4 and 5 are contaminated with dust and oil stains, the dust and oil stains can be cleaned with a simple cleaning.

Obviously, the specific implementations of the above-mentioned embodiments may also be modified. For example, the thickness of the easy-to-clean layer and the bonding layer may be adjusted according to the needs; and the specific materials of the bonding layer may be selected according to the actual products.

It can be understood that the above-mentioned embodiments are only exemplary embodiments for describing the principles of the present application.

## Claims

1. An easy-to-clean protective film, wherein the easy-to-clean protective film comprises a polyvinyl chloride bottom film and an easy-to-clean layer consisting of silicon dioxide particles on a side of the polyvinyl chloride bottom film; and wherein the easy-to-clean layer has a thickness of from 150 nm to 1µm.

2. The easy-to-clean protective film according to claim 1, wherein the polyvinyl chloride bottom film has a thickness of from 50µm to 100µm.

3. The easy-to-clean protective film according to claim 1, wherein a bonding layer is further arranged between the polyvinyl chloride bottom film and the easy-to-clean layer, and the polyvinyl chloride bottom film and the easy-to-clean layer are bonded together through the bonding layer.

4. The easy-to-clean protective film according to claim 3, wherein the bonding layer consists of polyurethane.

5. The easy-to-clean protective film according to claim 3, wherein the bonding layer has a thickness of from 5 µm to 75 µm.

6. The easy-to-clean protective film according to claim 1, wherein a pressure-sensitive adhesive layer is arranged on a side, far away from the easy-to-clean layer, of the polyvinyl chloride bottom film.

7. The easy-to-clean protective film according to claim 6, wherein a release layer is further arranged on a side, far away from the polyvinyl chlorine bottom film, of the pressure-sensitive adhesive layer.

8. A substrate assembly, comprising a substrate having arranged thereon a coating layer formed through coating, wherein the easy-to-clean protective film according to any one of claims 1-7 is attached to the coating layer.

9. A substrate assembly, comprising a substrate having the easy-to-clean protective film according to any one of claims 1-7 attached thereon.

## Patentansprüche

1. Eine leicht zu reinigende Schutzfolie, wobei die leicht zu reinigende Schutzfolie eine Polyvinylchloridbodenfolie und eine leicht zu reinigende Schicht, bestehend aus Siliziumdioxidteilchen, auf einer Seite der Polyvinylchloridbodenfolie aufweist; und wobei die leicht zu reinigende Schicht eine Dicke von 150 nm bis 1 µm aufweist.

2. Die leicht zu reinigende Schutzfolie nach Anspruch 1, wobei die Polyvinylchloridbodenfolie eine Dicke von 50 µm bis 100 µm aufweist.

3. Die leicht zu reinigende Schutzfolie nach Anspruch 1, wobei ferner eine Bindeschicht zwischen der Polyvinylchloridbodenfolie und der leicht zu reinigenden Schicht angeordnet ist und die Polyvinylchloridbodenfolie und die leicht zu reinigende Schicht durch die Bindeschicht aneinander gebunden sind.

4. Die leicht zu reinigende Schutzfolie nach Anspruch 3, wobei die Bindeschicht aus Polyurethan besteht.

5. Die leicht zu reinigende Schutzfolie nach Anspruch 3, wobei die Bindeschicht eine Dicke von 5 µm bis 75 µm aufweist.

6. Die leicht zu reinigende Schutzfolie nach Anspruch 1, wobei eine Haftkleberschicht auf einer von der leicht zu reinigenden Schicht weit entfernten Seite der Polyvinylchloridbodenfolie angeordnet ist.

7. Die leicht zu reinigende Schutzfolie nach Anspruch 6, wobei ferner eine Trennschicht auf einer von der Polyvinylchloridbodenfolie weit entfernten Seite der Haftkleberschicht angeordnet ist.

8. Eine Substratanordnung, umfassend ein Substrat, das eine darauf angeordnete Beschichtungsschicht aufweist, die durch eine Beschichtung ausgebildet wurde, wobei die leicht zu reinigende Schutzfolie nach einem der Ansprüche 1 bis 7 an der Beschichtungsschicht angebracht ist.

9. Eine Substratanordnung, umfassend ein Substrat, das die darauf angebrachte leicht zu reinigende Schutzfolie nach einem der Ansprüche 1 bis 7 aufweist.

## Revendications

1. Film protecteur facile à nettoyer, dans lequel le film protecteur facile à nettoyer comprend un film inférieur en polychlorure de vinyle et une couche facile à nettoyer constituée de particules de dioxyde de silicium sur un côté du film inférieur en chlorure de polyvinyle ; dans lequel la couche facile à nettoyer a une épaisseur allant de 150 nm à 1 µm.

2. Film protecteur facile à nettoyer selon la revendication 1, dans lequel le film inférieur en polychlorure de vinyle a une épaisseur allant de 50 µm à 100 µm.

3. Film protecteur facile à nettoyer selon la revendication 1, dans lequel une couche de liaison est agencée en outre entre le film inférieur en chlorure de polyvinyle et la couche facile à nettoyer, et le film inférieur en chlorure de polyvinyle et la couche facile à nettoyer sont liés ensemble par l'intermédiaire de la couche de liaison.

4. Film protecteur facile à nettoyer selon la revendication 3, dans lequel la couche de liaison est constituée de polyuréthane.

5. Film protecteur facile à nettoyer selon la revendication 3, dans lequel la couche de liaison a une épaisseur allant de 5 µm à 75 µm.

6. Film protecteur facile à nettoyer selon la revendication 1, dans lequel une couche d'adhésif sensible à la pression est agencée sur un côté, éloignée de la couche facile à nettoyer, du film inférieur en polychlorure de vinyle.

7. Film protecteur facile à nettoyer selon la revendication 6, dans lequel une couche antiadhésive est agencée en outre sur un côté, éloignée du film inférieur en polychlorure de vinyle, de la couche d'adhésif sensible à la pression.

8. Ensemble de substrat, comprenant un substrat sur lequel est agencée une couche de revêtement formée par revêtement, dans lequel le film protecteur facile à nettoyer selon l'une quelconque des revendications 1 à 7 est fixé à la couche de revêtement.

9. Ensemble de substrat, comprenant un substrat ayant le film protecteur facile à nettoyer selon l'une quelconque des revendications 1 à 7 fixé à celui-ci.
